# EUROPÄISCHE PATENTSCHRIFT

(11) **EP 0 587 102 B1**
(45) Veröffentlichungstag und Bekanntmachung des Hinweises auf die Patenterteilung: **14.05.1997**
(21) Anmeldenummer: 93114299.6
(22) Anmeldetag: 07.09.1993
(51) Int. Cl.: B23C 5/24, B23C 3/12, B27D 5/00

(54) **Kantenfräse mit Fräswerkzeug**
Edge milling machine with milling cutter
Fraiseuse de bonds avec fraise

(30) Priorität: 11.09.1992 DE 4230365
(43) Veröffentlichungstag der Anmeldung: 16.03.1994
(73) Patentinhaber: KARL M. REICH MASCHINENFABRIK GmbH, 72622 Nürtingen (DE)
(72) Erfinder: Weingart, Michael, D-73230 Kirchheim (DE); Reiner, Kuhn, D-72622 Nürtingen (DE)

(56) Entgegenhaltungen:
- EP-A- 0 446 907
- US-A- 2 839 107
- US-A- 3 760 685

## Beschreibung

Die Erfindung bezieht sich auf eine Kantenfräse mit Fräswerkzeug gemäß Oberbegriff von Anspruch 1.

Beim Abfräsen von Umleimern an plattenförmigen Werkstücken soll in gewissen Fällen ein einstellbarer Überstand des Umleimers über die Werkstückoberfläche erzielt werden. Dazu ist es bekannt, bei unveränderlichem Flugkreis des Fräswerkzeugs die Tastrolle mit einem elastischen Ring zu versehen, der durch einen Keil so gespreizt werden kann, daß sein Außendurchmesser relativ zum Flugkreis des Fräswerkzeugs veränderbar ist.

Die Nachteile dieser Ausführung bestehen darin, daß infolge der Nachgiebigkeit des elastischen Ringes eine genaue Einstellung auf den gewünschten Überstand nicht gewährleistet ist und daß sich der elastische Ring rasch abnützt und beschädigt werden kann.

Aufgabe der vorliegenden Erfindung ist daher die Schaffung einer Kantenfräse mit Fräswerkzeug der eingangs genannten Art, bei der die Einstellbarkeit zwischen Flugkreis des Fräswerkzeugs und der Tastrolle mit einfachen Mitteln und zuverlässig möglich ist.

Diese Aufgabe wird erfindungsgemäß durch das im kennzeichnenden Teil des Anspruchs 1 angegebene Merkmal gelöst.

Durch die radiale Einstellbarkeit der Schneidplatte lässt sich eine hohe Maßgenauigkeit des erwünschten Überstands des Umleimers mit einem einfachen und preisgünstigen Aufbau des Fräswerkzeugs erzielen. Dabei kann der Messerkopf entweder nur mit einer Schneidplatte oder auch mit zwei einander gegenüberliegenden Schneidplatten ausgerüstet sein.

Wird, wie im Unteranspruch gekennzeichnet, eine Zwischen-platte verwendet, dann lassen sich vorteilhafterweise handelsübliche Wendeschneidplatten verwenden.

Erfindungsgemäß kann die Schneidkante der Schneidplatte mit einer zur Fräserwelle geneigten Schneidkante versehen sein. Dabei ergibt sich der Vorteil, daß der Umleimer genau fluchtend mit der Oberfläche der Werkstückplatte abgefräst werden kann, ohne daß das Fräswerkzeug die Oberfläche der Werkstückplatte beschädigt.

Im folgenden sind Ausführungsbeispiele der Erfindung unter Bezugnahme auf die Zeichnungen näher beschrieben.

Es zeigen:
- Fig. 1: Erstes Ausführungsbeispiel eines Fräswerkzeugs, von der Seite
- Fig. 2: Schnitt nach Linie II-II in Fig. 1
- Fig. 3: Zweites Ausführungsbeispiel eines Fräswerkzeugs, von der Seite
- Fig. 4: Drittes Ausführungsbeispiel eines Fräswerkzeugs, perspektivisch
- Fig. 5: Viertes Ausführungsbeispiel eines Fräswerkzeugs, von der Seite

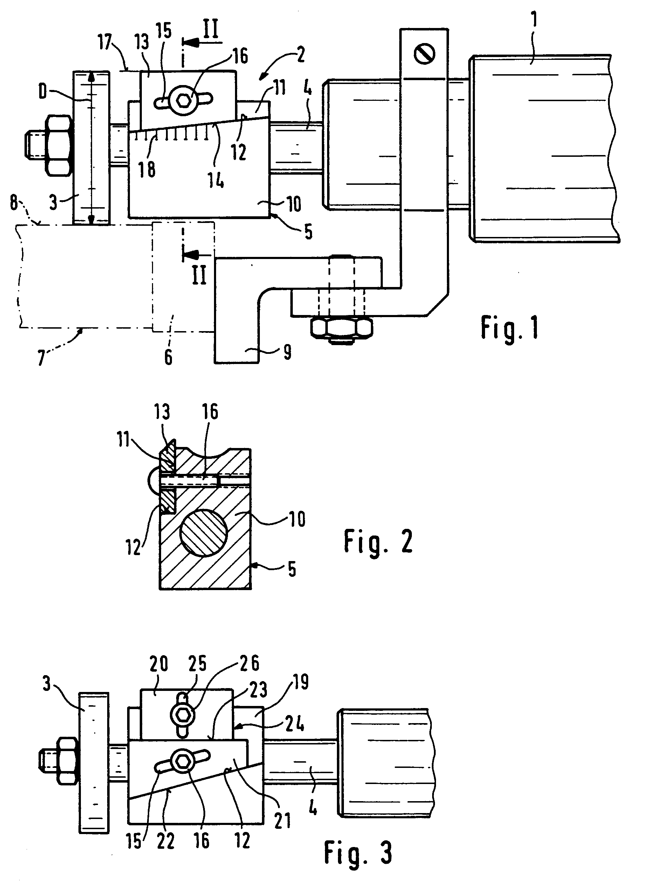

Bei einer in Fig. 1 dargestellten Kantenfräse 1 ist ein Fräswerkzeug 2 und eine Tastrolle 3 in Form eines Kugellagers auf einer antreibbaren Fräserwelle 4 gelagert.

Mit dem Fräswerkzeug 2 soll der Umleimer 6 eines plattenförmigen Werkstückes 7 entweder bündig zur Oberfläche 8 des Werkstücks 7 oder mit einem bestimmten Überstand dazu abgefräst werden.

Zur Führung der Kantenfräse 1 dient ein parallel zur Fräserwelle 4 einstellbarer Anschlag 9, der während des Abfräsens am Umleimer 6 anliegt und ein nicht dargestellter weiterer Anschlag, der auf der Oberfläche 8 aufliegt.

Wie auch Fig. 2 zeigt, weist das Fräswerkzeug 2 einen Messerkopf 10 auf der mit einer Aussparung 11 mit einer zur Fräserwelle 4 geneigten Anlagefläche 12 zur Aufnahme einer Schneidplatte 13 versehen ist.

Diese Schneidplatte 13 liegt mit ihrer Unterkante 14 an der geneigten Anlagefläche 12 an und ist mit einem schrägen Schlitz 15 versehen, der zur Aufnahme einer mit dem Messerkopf 10 verschraubten Befestigungsschraube 16 dient.

Nach Lösen von Befestigungsschraube 16 und Verschieben der Schneidplatte 13 parallel zur Fräserwelle 4 verändert sich somit der Flugkreis 17 relativ zum Außendurchmesser von Tastrolle 3. Damit lässt sich der Überstand von Umleimer 6 beliebig einstellen.

Für die Ablesung des Maßes der Radialverschiebung von Schneidplatte 13 ist auf dem Messerkopf 10 eine Maßskala 18 vorgesehen, die so eingeteilt ist, daß beim vorliegenden Ausführungsbeispiel eine Parallelverschiebung von Schneidplatte 13 von 2 mm einer Radialverschiebung von 0,1 mm entspricht.

Bei einer weiteren Ausführungsform der Erfindung gemäß Fig. 3 ist am Messerkopf 19 zwischen Schneidplatte 20 und geneigter Anlagefläche 12 eine trapezförmige Zwischenplatte 21 vorgesehen, deren Unterkante 22 an der Anlagefläche 12 anliegt und die wieder mit einem Schlitz 15 versehen ist, in den eine Befestigungsschraube 16 eingreift.

Mit ihrer zur Fräserwelle 4 parallelen Oberkante 23 liegt die Zwischenplatte 21 an der radial verstellbaren Schneidplatte 20 an, die einen zur Fräserwelle 4 senkrechten Schlitz 25 mit Befestigungsschraube 26 aufweist.

Durch achsiales Verschieben von Zwischenplatte 21 ergibt sich also eine radiale Verstellung von Schneidplatte 20.

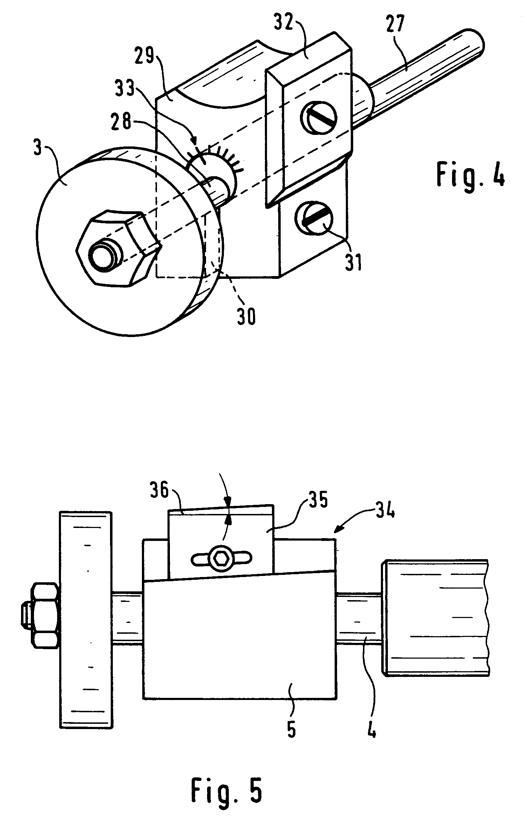

Fig. 4 zeigt ein weiteres Ausführungsbeispiel des erfindungsgemäßen Fräswerkzeugs, wobei die Fräserwelle 27 einen exzentrischen Abschnitt 28 aufweist. Auf diesem exzentrischen Abschnitt 28 ist ein Messerkopf 29 einstellbar gelagert, wozu er einen Spannschlitz 30 aufweist und mittels einer Spannschraube 31 auf dem exzentrischen Abschnitt 28 festklemmbar ist.

Die Schneidplatte 32 ist in diesem Fall unverschiebbar am Messerkopf 29 befestigt.

Da die Tastrolle 3 gleichachsig auf der Fräserwelle 27 befestigt ist, ergibt sich bei der Verdrehung von Messerkopf 29 eine Radialverschiebung von Schneidplatte 32, die wieder durch eine Maßskala 33 abgelesen werden kann.

Fig. 5 zeigt ein weiteres Ausführungsbeispiel des Fräswerkzeugs 34 mit einem Messerkopf 5, wobei jedoch die Schneidplatte 35 eine zur Fräserwelle 4 geringfügig geneigte Schneidkante 36 aufweist.Damit ist gewährleistet, daß beim Abfräsen des Umleimers fluchtend zur Oberfläche 8 von Werkstück 7 diese Oberfläche 8 vom Fräswerkzeug nicht beschädigt wird.Die Einstellmöglichkeit der Schneidplatte 35 entspricht dem Ausführungsbeispiel gemäß Fig. 1.

## Patentansprüche

1. Kantenfräse (1) mit Fräswerkzeug (2,34) mit einem Messerkopf (5,10,19,29), an dem mindestens eine Schneidplatte (13,20,32,35) auswechselbar befestigt ist und mit einer gleichachsig zum Fräswerkzeug auf der Fräserwelle (4,27) angeordneten Tastrolle (3), wobei der Flugkreis (17) des Fräswerkzeugs und der Außendurchmesser der Tastrolle relativ zueinander einstellbar sind, **dadurch gekennzeichnet,** daß die Schneidplatte (13,20,32,35) radial einstellbar an der Fräserwelle (4,27) befestigbar ist.

2. Kantenfräse nach Anspruch 1, **dadurch gekennzeichnet**, daß der Messerkopf (10) eine Aussparung (11) mit einer zur Fräserwelle (4) geneigten Anlagefläche (12) aufweist, längs der die Schneidplatte (13) am Messerkopf (10) einstell- und feststellbar gelagert ist.

3. Kantenfräse nach Anspruch 2, **dadurch gekennzeichnet**, daß in der Aussparung (11) zwischen Schneidplatte (20) und Anlagefläche (12) eine trapezförmige Zwischenplatte (21) vorgesehen ist, die längs der geneigten Anlagefläche (12) einstell- und feststellbar am Messerkopf (19) gelagert ist.

4. Kantenfräse nach Anspruch 1, **dadurch gekennzeichnet**, daß die Fräserwelle (27) einen exzentrischen Abschnitt (28) aufweist, auf dem der Messerkopf (29) einstell- und feststellbar gelagert ist.

5. Kantenfräse nach einem der Ansprüche 1 bis 4, **dadurch gekennzeichnet,** daß die Schneidplatte (35) eine zur Fräserwelle (4) geneigte Schneidkante (36) aufweist.

6. Kantenfräse nach einem der Ansprüche 1 bis 5, **dadurch gekennzeichnet,** daß zur Anzeige der Radialverschiebung der Schneidplatte (13,20,32) am Messerkopf (5,19,29) eine Maßskala (18,33) vorgesehen ist.

## Claims

1. A router (1) with routing tool (2, 34) having a cutter head (5, 10, 19, 29) to which is interchangeably attached at least one cutting tip (13, 20, 32, 35) and having a feeler roller (3) disposed on a router shaft (4, 27) in the same axis as said routing tool, with the orbit (17) of said routing tool and the outer diameter of said feeler roller being adjustable relative to one another, **characterized in that** said cutting tip (13, 20, 32, 35) is attachable in radially adjustable manner to said router shaft (4, 27).

2. A router according to Claim 1, **characterized in that** said cutter head (10) has a recess (11) with a contact surface (12) oblique to said router shaft (4) and along which said cutting tip (13) is mounted adjustably and lockably on said cutter head (10).

3. A router according to Claim 2, **characterized in that** a trapezoidal intermediate plate (21) is provided in said recess (11) between said cutting tip (20) and said contact surface (12) and is mounted adjustably and lockably on said cutter head (19) along said oblique contact surface (12).

4. A router according to Claim 1, **characterized in that** said router shaft (27) has an eccentric section (28) on which said cutter head (29) is adjustably and lockably mounted.

5. A router according to one of Claims 1 to 4, **characterized in that** said cutting tip (35) has a cutting edge (36) oblique to said router shaft (4).

6. A router according to one of Claims 1 to 5, **characterized in that** a scale (18, 33) is provided for indication of the radial displacement of said cutting tip (13, 20, 32) on said cutter head (5, 19, 29).

## Revendications

1. Fraiseuse de chant (1) comportant un outil de fraisage (2, 34) doté d'une tête porte-couteau (5, 10, 19, 29), sur laquelle au moins un couteau (13, 20, 32, 35) est fixée de manière interchangeable, et un galet palpeur (3), fixé sur la broche de fraisage (4, 27) dans le même axe que l'outil, le cercle de coupe (17) de l'outil étant réglable par rapport au diamètre extérieur dudit galet palpeur, **caractérisée en ce que** le couteau (13, 20, 32, 35) est fixé sur la broche de fraisage (4, 27) de manière déplaçable en sens radial.

2. Fraiseuse de chant selon revendication 1, **caractérisée en ce que** la tête porte-couteau (10) comporte un évidement (11) qui possède une face d'appui (12) inclinée par rapport à la broche de fraisage (4) et le long duquel le couteau (13) équipant ladite tête porte-couteau (10) peut être déplacé et fixé.

3. Fraiseuse de chant selon revendication 2, **caractérisée en ce qu'** une plaquette intermédiaire trapézoïdale (21) est prévue entre le couteau (20) et ladite face d'appui (12), cette plaquette (21) pouvant être déplacée et fixée sur la tête porte-couteau (19) le long de ladite face d'appui (12).

4. Fraiseuse de chant selon revendication 1, **caractérisée en ce que** la broche de fraisage (27) comporte une partie excentrique (28) sur laquelle la tête porte-couteau (29) peut être déplacée et fixée.

5. Fraiseuse de chant selon une des revendications 1 à 4, **caractérisée en ce que** le couteau (35) dispose d'une arête de coupe (36) inclinée par rapport à la broche de fraisage (4).

6. Fraiseuse de chant selon une des revendications 1 à 5, **caractérisée en ce qu'** une échelle de mesure (18, 33) est prévue sur la tête porte-couteau (5, 19, 29), et qui indique le déplacement radial du couteau (13, 20, 32).
